# EUROPÄISCHE PATENTSCHRIFT

(11) **EP 0 758 728 B1**
(45) Veröffentlichungstag und Bekanntmachung des Hinweises auf die Patenterteilung: **08.09.1999**
(21) Anmeldenummer: 96109615.3
(22) Anmeldetag: 14.06.1996
(51) Int. Cl.: F16L 3/13

(54) **Halteelement aus Kunststoff**
Plastic supporting element
Elément de maintien en plastique

(30) Priorität: 14.08.1995 DE 19529897
(43) Veröffentlichungstag der Anmeldung: 19.02.1997
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Eder, Thomas, Dr.-Ing.

(56) Entgegenhaltungen:
- EP-A- 0 612 944
- DE-A- 4 334 926
- US-A- 4 467 987
- US-A- 4 467 988
- US-A- 4 505 611
- US-A- 5 184 794

## Beschreibung

Die Erfindung bezieht sich auf ein Halteelement aus Kunststoff, mit mindestens einem schalenförmigen Haltebereich für mindestens ein rohrförmiges Element und mit einem Lagerbereich mit Eingriffsteilen zur Befestigung an einem Träger, insbesondere einer Kraftfahrzeugkarosserie.

Als Stand der Technik sind bereits derartige Halteelemente bekannt (DE 30 02 031 C2, GB 2 098 699 A, DE 33 30 263 A1 EP-A-612944 Alle diese aus Kunststoff bestehenden, einstückigen Halteelemente weisen schalenförmig ausgebildete Haltebereiche auf und sind über jeweils einen Lagerbereich an einem Träger befestigbar. Nachteilig ist bei diesen bekannten Konstruktionen der relativ geringe Dämpfungsgrad bezüglich Schwingungen und Geräuschen, was sich insbesondere auf dem Gebiet der Kraftfahrzeugtechnik störend äußert.

Ein weiterer Nachteil besteht in einem oftmals ungenügenden Toleranzausgleich, da es ohne sehr hohen konstruktiven Aufwand nicht möglich ist, insbesondere bei einer Massenfertigung stets die exakte Maßhaltigkeit zu erreichen.

Zur Verbesserung des Toleranzausgleichs sind bereits verschiedene Konstruktionen vorgeschlagen worden (DE 43 34 926 A1, USPS 4 505 611), bei welchen speziell geformte elastische Arme Anwendung finden. Weiterhin wurde vorgeschlagen (DE 33 30 263 A1), im Innenraum eines Lagerbereichs schräg verlaufende Flügel anzuordnen, um das Befestigungselement an einem Profilbolzen unter Berücksichtigung eines gewissen Toleranzausgleichs zu haltern.

Demgegenüber besteht die Aufgabe der vorliegenden Erfindung darin, ein Halteelement der eingangs genannten Art zu schaffen, welches bei einer sehr guten Dämpfungswirkung zu einer weiteren Verbesserung des Toleranzausgleichs beiträgt.

Diese Aufgabe wird erfindungsgemäß dadurch gelöst, daß der Lagerbereich über mindestens zwei im axialen Abstand voneinander angeordnete, elastische Verbindungsbereiche mit einem Rahmen verbunden ist, daß der Rahmen stegförmig ausgebildet ist, daß mindestens ein Steg des Rahmens Teil eines Haltebereichs ist und daß Verbindungsbereich aus mindestens zwei spiralförmig verlaufenden, elastischen Armen besteht.

Durch das Zusammenwirken dieser elastischen Arme, durch welche der Lagerbereich mit den verschiedenen Haltebereichen wirkungsmäßig verbunden ist, ergibt sich in Verbindung mit der stegartigen Gestaltung des Rahmens eine sehr gute Dämpfungswirkung der gesamten Baueinheit. Darüber hinaus wird ein guter Toleranzausgleich erzielt.

Die Haltebereiche sind so ausgebildet, daß sie in weiterer Ausgestaltung der Erfindung auch zur Aufnahme von rohrförmigen Elementen, beispielsweise Kabeln oder Rohren mit verschiedenen Durchmessern ausgebildet sind.

Da die vorzugsweise drei spiralförmig verlaufenden, elastischen Arme an beiden Befestigungsbereichen im axialen Abstand jeweils weit voneinander entfernt sind, ergibt sich eine erhebliche Verbesserung der Dämpfungswirkung mit zusätzlichem Toleranzausgleich. Die stegförmige Gestaltung des Rahmens gestattet es darüber hinaus, mehrere, beispielsweise verschiedenartig gestaltete Haltebereiche an den Lagerbereich anzuschließen, wobei diese Haltebereiche beispielsweise Haltestegpaare oder einzelne, im Abstand voneinander angeordnete Haltestege aufweisen können, welche jeweils nicht direkt mit dem Lagerbereich verbunden sind. Es liegt eine Anzahl von Aussparungen in dem Rahmen vor, wodurch sich eine weitere Verbesserung der Dämpfungswirkung ergibt.

Die Erfindung wird nachfolgend anhand eines in der Zeichnung dargestellten Ausführungsbeispiels näher beschrieben. In der Zeichnung zeigen:
Fig. 1 eine Seitenansicht des erfindungsgemäßen Halteelements
Fig. 2 eine Draufsicht auf das Halteelement nach Fig. 1
Fig. 3 eine Vorderansicht des Halteelements nach Fig. 1
Fig. 4 bis 7 perspektivische Darstellungen des erfindungsgemäßen Halteelements nach Fig. 1.

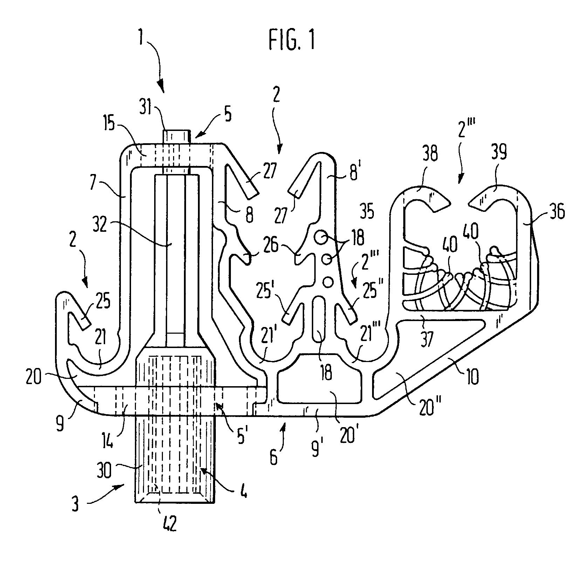

Wie aus den Fig. 1 bis 7 hervorgeht, liegt ein einstückig gestaltetes Halteelement 1 aus Kunststoff vor, welches im wesentlichen aus einem Lagerbereich 3 besteht, der bei dem vorliegenden Ausführungsbeispiel mit vier Haltebereichen 2, 2', 2'' und 2''' verbunden ist. Diese Haltebereiche dienen zur Aufnahme von nicht näher dargestellten rohrförmigen Elementen, auch unterschiedlichen Durchmessers. Außerdem weist das Halteelement 1 ein Eingriffsteil 4 zur direkten oder indirekten Befestigung an einem Träger auf.

Insbesondere aus den Fig. 1, 4 und 5 geht hervor, daß der Lagerbereich 3 über mindestens zwei im axialen Abstand voneinander angeordnete, elastische Verbindungsbereiche 5 und 5' mit einem Rahmen 6 verbunden ist. Dieser Rahmen 6 ist nach Fig. 1 stegförmig ausgebildet: Er weist im Abstand voneinander angeordnete vertikale Stege 7, 8, 8', 35 und 36 auf, sowie den gewölbten Steg 9, den horizontalen Steg 9' und den schräg anlaufenden Steg 10.

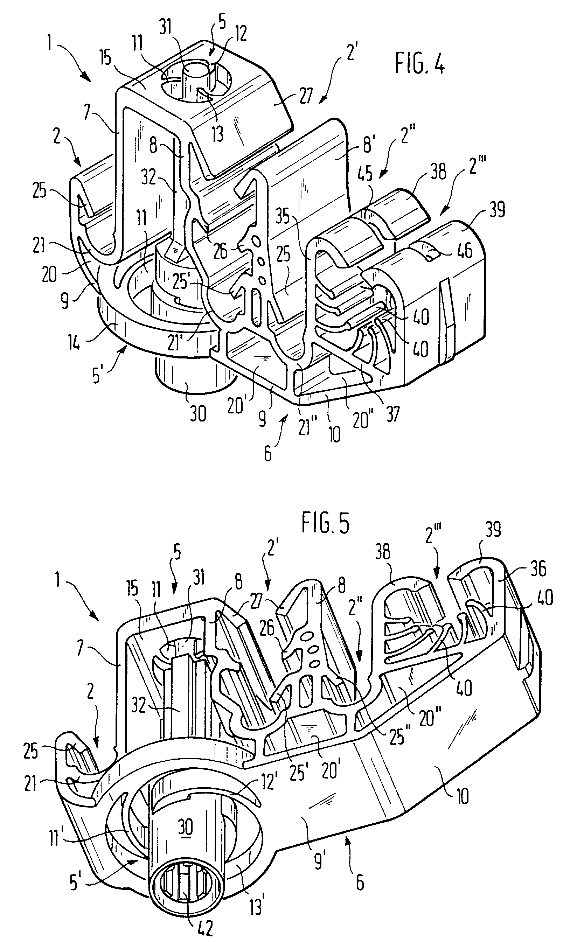

Aus Fig. 4 und 5 geht hervor, daß der jeweilige Verbindungsbereich 5 und 5' aus drei, über den Umfang des Lagerbereichs 3 verteilten elastischen Armen 11, 12, 13 im oberen Bereich sowie 11', 12', 13' im unteren Bereich des Rahmens 6 besteht. Diese Arme verlaufen jeweils spiralförmig. Es ergibt sich dadurch eine dreidimensionale Bewegungsmöglichkeit.

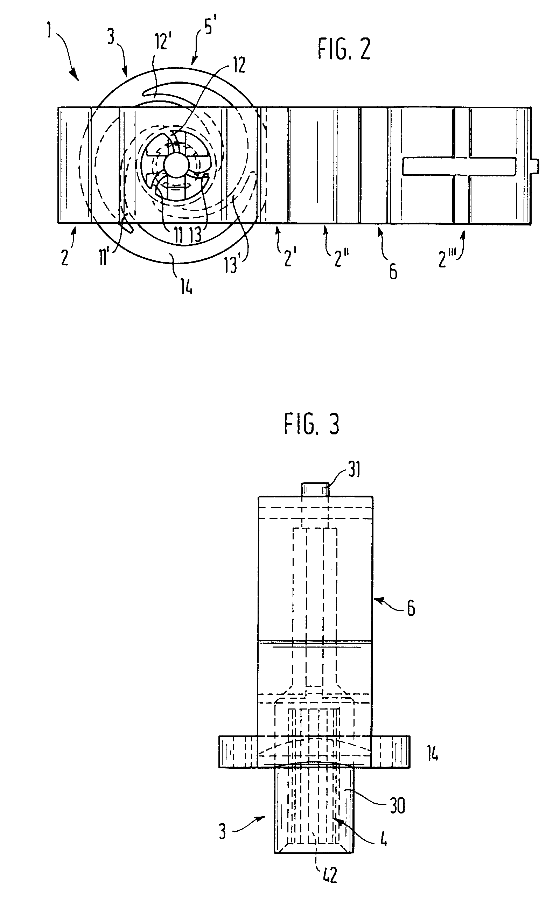

Gemäß Fig. 2 und 5 ist das untere Ende das Rahmens 6 als Ring 14 ausgebildet, wohingegen das obere Ende des Rahmens 6 als Rechteck 15 gestaltet ist. Auch die umgekehrte Anordnung ist möglich, ebenso wie zwei Rechtecke bzw. zwei Ringe für die Verbindungsbereiche 5 und 5'.

Insbesondere nach Fig. 1, 6 und 7 schließen an den Ring 14 des Rahmens 6 die Stege 9 und 9' an, oberhalb welchen eine Ausnehmung 20 und 20' vorgesehen ist. Diese Ausnehmung geht jeweils in eine schalenförmige Aufnahme 21, 21' und 21'' über, welche zur Aufnahme der nicht näher dargestellten rohrförmigen Elemente dient.

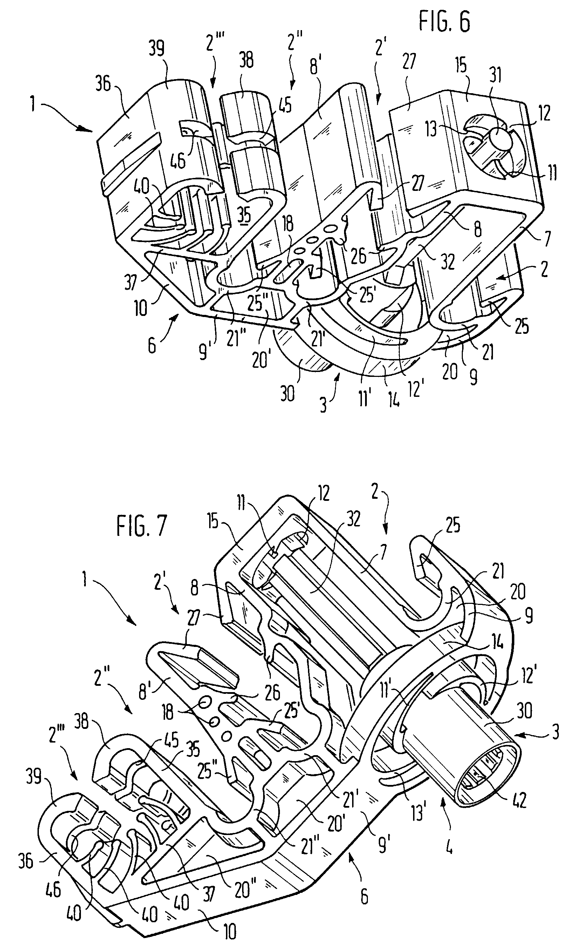

Insbesondere aus Fig. 4 und 6 geht hervor, daß der Lagerbereich 3 einen oberen und einen unteren zylinderförmigen Abschnitt 30 und 31 aufweist, wobei diese Abschnitte 30 und 31 über die spiralförmigen elastischen Arme 11, 12, 13 sowie 11', 12', 13' mit dem Rechteck 15 am oberen Ende des Rahmens und dem Ring 14 am unteren Ende des Rahmens verbunden sind.

Darüber hinaus ist aus den Fig. 1, 5 und 7 erkennbar, daß der Lagerbereich 3 zwischen dem oberen und dem unteren zylindrischen Abschnitt 30 und 31 einen im Querschnitt polygonalen Abschnitt 32 aufweist. Beispielsweise kann der Querschnitt aus vier rechteckigen Stegen zusammengesetzt sein. Der Querschnitt dieses polygonalen Mittelabschnitts 32 kann hierbei kleiner als der Durchmesser des unteren zylinderförmigen Abschnitts 30 des Lagerbereichs 3 sein. Es bestehen auch andere Gestaltungsmöglichkeiten für den Mittelabschnitt, z.B. kreisförmiger Querschnitt.

Wie aus Fig. 1 ersichtlich, kann der Abstand des Rings 14 von dem Rechteck 15 größer als die Länge des polygonalen Mittelabschnitts 32 sein, um einen möglichst großen Abstand der Verbindungsbereiche 5 und 5' zu erzielen.

Gemäß Fig. 1 und 4 weisen die Haltebereiche 2, 2', 2'' oberhalb der schalenförmigen Aufnahme 21, 21' und 21'' mindestens einen gegen den Umfang eines zu lagernden rohrförmigen Elements gerichteten Haltesteg 25, 25' und 25'' auf. Darüber hinaus geht aus Fig. 1 und 5 hervor, daß beispielsweise der Haltebereich 2" mehrere, im Abstand übereinander angeordnete Haltestegpaare 26 und 27 aufweist. Hierbei ist jeweils der eine Teil des Haltestegpaares 26 bzw. 27 an dem vertikalen Steg 8 des Rahmens 6 und der andere Teil an einem zusätzlichen vertikalen Steg 8' des Rahmens 6 angeordnet. Durch diese Gestaltung ist es möglich, daß beispielsweise der Haltebereich 2' mehrere, übereinander angeordnete Kabel bzw. Rohrleitungen auch unterschiedlichen Durchmessers aufnimmt, welche mit Hilfe des Haltestegs 25' sowie der Haltestegpaare 26 und 27 einwandfrei und geräuschgedämpft in dem erfindungsgemäßen Halteelement 1 befestigt sind.

Der zusätzliche Steg 8' kann beispielweise mit mehreren Ausnehmungen 18 versehen sein, um neben einer Material- und/oder Gewichtsersparnis zu einer weiteren Geräuschdämpfung beizutragen.

Aus Fig. 1, 4 und 7 geht hervor, daß oberhalb der Aussparung 20'', welche durch den schrägen Steg 10 des Gehäuses 6 begrenzt ist, ein weiterer Haltebereich 2''' angeordnet ist. Dieser Haltebereich 2''' wird durch drei rechtwinklig zueinander ausgerichtete Stege 35, 36, 37 des Rahmens 6 gebildet. An der Innenseite dieser Stege sind Flügel 40 angeordnet, welche spiralförmig verlaufen, elastisch ausgebildet sind und im vorderen Bereich jeweils eine Verdickung aufweisen können.

Darüber hinaus besitzen die beiden senkrechten Stege 35 und 36 obere, gegeneinander gekrümmte Einführbereiche 38 und 39, wodurch sich eine Montageerleichterung mindestens eines in dem Haltebereich 2''' anzuordnenden rohrförmigen Elements ergibt. Hierbei können diese Einführbereiche 38 und 39 jeweils einen mittleren Schlitz 45 und 46 aufweisen.

Wie aus Fig. 1, 5 und 7 hervorgeht, ist der Lagerbereich 3 zylinderförmig ausgebildet und hat innenseitig längs verlaufende Haltestege 42. Diese Haltestege 42 dienen dazu, sich in einen nicht näher dargestellten Profilbolzen des Trägers, beispielsweise einer Kraftfahrzeugkarosserie, einzulagern und damit eine einwandfreie Halterung des erfindungsgemäßen Befestigungselements an der Kraftfahrzeugkarosserie zu gewährleisten.

In einer nicht näher dargestellten Ausführungsmöglichkeit kann der Lagerbereich 3 auch so gestaltet sein, daß er - wie an sich bekannt - als Profilbolzen, als Clip oder als Halteelement mit einer Konfiguration vorliegt, wie sie zum Einsetzen in eine Öffnung eines Trägers gestaltet ist. Darüber hinaus kann oberhalb des Profilbolzens bzw. des Clip oder des Halteelements eine umlaufende Dichtlippe angeordnet sein, um eine Dichtwirkung gegen die Öffnung des Trägers zu erzielen.

Durch die spezielle Gestaltung des Halteelements ergibt sich infolge des Einsatzes von spiralförmig verlaufenden, im Abstand voneinander liegenden Armen und der Schaffung eines stegartigen Rahmens eine sehr gute Dämpfungswirkung bei einer weiteren Verbesserung des Toleranzausgleichs. Damit ist dieses erfindungsgemäße Halteelement insbesondere für den Einsatz in der Kraftfahrzeugtechnik geeignet.

## Patentansprüche

1. Halteelement aus Kunststoff, mit mindestens einem schalenförmigen Haltebereich für mindestens ein rohrförmiges Element und mit einem Lagerbereich mit Eingriffsteilen zur Befestigung an einem Träger, insbesondere einer Kraftfahrzeugkarosserie,
**dadurch gekennzeichnet**,
daß der Lagerbereich (3) über mindestens zwei, im axialen Abstand voneinander angeordnete, elastische Verbindungsbereiche (5, 5') mit einem Rahmen (6) verbunden ist,
daß der Rahmen (6) stegförmig ausgebildet ist,
daß mindestens ein Steg (7, 8, 8', 9, 9', 10, 35, 36) des Rahmens (6) Teil eines Haltebereichs (2, 2', 2'', 2''') ist,
und daß der jeweilige Verbindungsbereich (5, 5') aus mindestens zwei spiralförmig verlaufenden, elastischen Armen (11, 12, 13; 11', 12', 13') besteht.

2. Halteelement nach Anspruch 1, **gekennzeichnet durch** drei, über den Umfang des Lagerbereichs (3) verteilte elastische Arme (11, 12, 13; 11', 12', 13') am oberen und am unteren Ende des Rahmens (6).

3. Halteelement nach Anspruch 2, **dadurch gekennzeichnet**, daß die Verbindungsbereiche (5, 5') als Ring (14) oder als Rechteck (15) ausgebildet sind.

4. Halteelement nach Anspruch 1 und 3, **dadurch gekennzeichnet**, daß zumindest ein Steg (9, 9') an den Ring (14) anschließt und über eine Ausnehmung (20, 20') in mindestens eine schalenförmige Aufnahme (21, 21', 21'') des Haltebereichs (2, 2', 2'') übergeht.

5. Halteelement nach einem der vorhergehenden Ansprüche, **dadurch gekennzeichnet**, daß der Lagerbereich (3) einen oberen und einen unteren zylinderförmigen Abschnitt (30, 31) aufweist und daß diese Abschnitte (30, 31) über die spiralförmigen, elastischen Arme (11, 12, 13; 11', 12', 13') mit dem oberen und dem unteren Ende des Rahmens (6) verbunden sind.

6. Halteelement nach Anspruch 5, **dadurch gekennzeichent**, daß der Lagerbereich (3) zwischen dem oberen und dem unteren zylindrischen Abschnitt (30, 31) einen im Querschnitt polygonalen oder kreisförmigen Mittelabschnitt (32) aufweist.

7. Halteelement nach Anspruch 6, **dadurch gekennzeichnet**, daß der Querschnitt des Mittelabschnitts (32) kleiner als der Durchmesser des unteren zylinderförmigen Abschnitts (30) ist.

8. Halteelement nach einem der vorhergehenden Ansprüche 5 bis 7, **dadurch gekennzeichnet**, daß der Abstand der Enden (14, 15) des Rahmens (6) voneinander größer als die Länge des Mittelabschnitts (32) ist.

9. Halteelement nach einem der vorhergehenden Ansprüche, **dadurch gekennzeichnet**, daß die Haltebereiche (2, 2', 2'') oberhalb der schalenförmigen Aufnahme (21, 21', 21'') mindestens einen gegen den Umfang eines zu lagernden rohrförmigen Elements gerichteten Haltesteg (25, 25', 25'') aufweisen.

10. Halteelement nach Anspruch 9, **dadurch gekennzeichnet**, daß mindestens ein Haltebereich (2') mehrere, im Abstand übereinander angeordnete Haltestegpaare (26, 27) aufweist.

11. Halteelement nach Anspruch 10, **dadurch gekennzeichnet**, daß jeweils der eine Teil eines Haltestegpaares (26, 27) an einem vertikalen Steg (8) des Rahmens (6) und der andere Teil an einem zusätzlichen vertikalen Steg (8') des Rahmens angeordnet ist.

12. Halteelement nach Anspruch 11, **dadurch gekennzeichnet**, daß der zusätzliche Steg (8') mit mindestens einer Ausnehmung (18) versehen ist.

13. Halteelement nach einem der vorhergehenden Ansprüche, **dadurch gekennzeichnet**, daß oberhalb einer Ausnehmung (20'') des Rahmens (6) ein weiterer Haltebereich (2''') angeordnet ist, welcher über einen Teil seines Umfangs an der Innenwand angeordnete, schräg in den Innenraum ragende, elastische Flügel (40) aufweist.

14. Halteelement nach Anspruch 13, **dadurch gekennzeichnet**, daß der Innenraum des Haltebereichs (2''') durch drei rechtwinklig zueinander ausgerichtete Stege (35, 36, 37) gebildet ist, an deren Innenseiten die Flügel (40) angeordnet sind.

15. Halteelement nach Anspruch 13 und 14, **dadurch gekennzeichnet**, daß die zwei im Abstand voneinander angeordneten senkrechten Stege (35, 36) obere, gegeneinander gekrümmte Einführbereiche (38, 39) aufweisen.

16. Haltelement nach Anspruch 15, **dadurch gekennzeichnet**, daß die Einführbereiche (38, 39) jeweils einen Mittelschlitz (45, 46) aufweisen.

17. Halteelement nach einem der vorhergehenden Ansprüche, **dadurch gekennzeichnet**, daß der zylindrische Abschnitt (30) des Lagerbereichs (3) innenseitig längsverlaufende Haltestege (42) zum Einlagern in einen an dem Träger befestigten Profilbolzen aufweist.

18. Halteelement nach einem oder mehreren der Ansprüche 1 bis 16, **dadurch gekennzeichnet**, daß der Lagerbereich (3) mit einem Profilbolzen, einem Clip oder einem Halteelement zum Einsetzen in eine Öffnung des Trägers versehen ist.

19. Halteelement nach Anspruch 18, **dadurch gekennzeichnet**, daß oberhalb des Profilbolzens bzw. des Clip oder des Halteelements eine umlaufende Dichtlippe unterhalb des Rahmens (6) angeordnet ist.

## Claims

1. Plastic retaining element, having at least one shell-like retaining region for at least one tubular element and having a bearing region with engagement parts for fastening on a carrier, in particular a motor-vehicle body, characterized in that the bearing region (3) is connected to a frame (6) via at least two axially spaced-apart, elastic connecting regions (5, 5'), in that the frame (6) is of web-like design, in that at least one web (7, 8, 8', 9, 9', 10, 35, 36) of the frame (6) is part of a retaining region (2, 2', 2'', 2'''), and in that the respective connecting region (5, 5') comprises at least two helically running, elastic arms (11, 12, 13; 11', 12', 13').

2. Retaining element according to Claim 1, characterized by three elastic arms (11, 12, 13; 11', 12', 13'), distributed over the circumference of the bearing region (3), at the top end and at the bottom end of the frame (8).

3. Retaining element according to Claim 2, characterized in that the connecting regions (5, 5') are designed as a ring (14) or as a rectangle (15).

4. Retaining element according to Claims 1 and 3, characterized in that at least one web (9, 9') adjoins the ring (14) and, via a recess (20, 20'), merges into at least one shell-like receiving means (21, 21', 21'') of the retaining region (2, 2', 2'').

5. Retaining element according to one of the preceding claims, characterized in that the bearing region (3) has a top cylindrical section and a bottom cylindrical section (30, 31), and in that these sections (30, 31) are connected to the top end and the bottom end of the frame (6) via the helical, elastic arms (11, 12, 13; 11', 12', 13').

6. Retaining element according to Claim 5, characterized in that the bearing region (3) has a cross-sectionally polygonal or circular central section (32) between the top cylindrical section and the bottom cylindrical section (30, 31).

7. Retaining element according to Claim 6, characterized in that the cross section of the central section (32) is smaller than the diameter of the bottom cylindrical section (30).

8. Retaining element according to one of the preceding Claims 5 to 7, characterized in that the distance by which the ends (14, 15) of the frame (6) are spaced apart from one another is greater than the length of the central section (32).

9. Retaining element according to one of the preceding claims, characterized in that the retaining regions (2, 2', 2''), above the shell-like receiving means (21, 21', 21''), have at least one retaining web (25, 25', 25'') which is directed towards the circumference of a tubular element which is to be supported.

10. Retaining element according to Claim 9, characterized in that at least one retaining region (2') has a plurality of retaining-web pairs (26, 27) which are spaced apart one above the other.

11. Retaining element according to Claim 10, characterized in that in each case one part of a retaining-web pair (26, 27) is arranged on a vertical web (8) of the frame (6) and the other part is arranged on an additional vertical web (8') of the frame.

12. Retaining element according to Claim 11, characterized in that the additional web (8') is provided with at least one recess (18).

13. Retaining element according to one of the preceding claims, characterized in that arranged above a recess (20'') of the frame (6) is a further retaining region (2''') which has elastic fins (40) which are arranged on the inner wall, over part of its periphery, and project obliquely into the interior.

14. Retaining element according to Claim 13, characterized in that the interior of the retaining region (2''') is formed by three webs (35, 36, 37) which are aligned at right angles to one another and on the insides of which the fins (40) are arranged.

15. Retaining element according to Claims 13 and 14, characterized in that the two vertical webs (35, 36), which are spaced apart from one another, have top introduction regions (38, 39) which are curved towards one another.

16. Retaining element according to Claim 15, characterized in that the introduction regions (38, 39) each have a central slit (45, 46).

17. Retaining element according to one of the preceding claims, characterized in that the cylindrical section (30) of the bearing region (3) has retaining webs (42) which run longitudinally on the inside and are intended for positioning in a profile bolt fastened on the carrier.

18. Retaining element according to one or more of Claims 1 to 16, characterized in that the bearing region (3) is provided with a profile bolt, a clip or a retaining element for insertion into an opening of the carrier.

19. Retaining element according to Claim 18, characterized in that, above the profile bolt or the clip or the retaining element, a peripheral sealing lip is arranged beneath the frame (6).

## Revendications

1. Élément de maintien en matière plastique, qui comporte au moins une zone de maintien en forme de coque destinée à au moins un élément de forme tubulaire, et comportant une zone de montage comportant des parties d'engagement destinées à la fixation sur un support, en particulier une carrosserie de véhicule automobile,
caractérisé en ce que :
la zone de montage (3) est reliée à un cadre (6) par au moins deux zones de jonction élastiques (5, 5') agencées à distance axiale l'une de l'autre,
le cadre (6) est réalisé en forme de barrettes,
au moins une barrette (7, 8, 8', 9, 9', 10, 35, 36) du cadre (6) fait partie d'une zone de maintien (2, 2', 2", 2"'), et
la zone de jonction respective (5, 5') est constituée par au moins deux bras élastiques (11, 12, 13 ; 11', 12', 13') qui s'étendent sous forme de spirale.

2. Élément de maintien selon la revendication 1, caractérisé par trois bras élastiques (11, 12, 13 ; 11', 12', 13') répartis sur la périphérie de la zone de montage (3) à l'extrémité supérieure et à l'extrémité inférieure du cadre (6).

3. Élément de maintien selon la revendication 2, caractérisé en ce que les deux zones de jonction (5, 5') sont réalisées sous forme de bagues (14), ou sous forme de rectangles (15).

4. Élément de maintien selon les revendications 1 et 3, caractérisé en ce qu'une barrette au moins (9, 9') se raccorde à la bague (14), et se transforme par l'intermédiaire d'un évidement (20, 20') en au moins un logement (21, 21', 21") en forme de coque de la zone de maintien (2, 2', 2").

5. Élément de maintien selon l'une des revendications précédentes, caractérisé en ce que la zone de montage (3) comporte un tronçon supérieur et un tronçon inférieur de forme cylindrique (30, 31), en ce que ces tronçons (30, 31) sont reliés à l'extrémité supérieure et à l'extrémité inférieure du cadre (6) par l'intermédiaire des bras élastiques en forme de spirale (11, 12, 13 ; 11', 12', 13').

6. Élément de maintien selon la revendication 5, caractérisé en ce que la zone de montage (3) présente entre le tronçon supérieur et le tronçon inférieur cylindriques (30, 31), un tronçon médian (32) à section polygonale, ou de forme circulaire.

7. Élément de maintien selon la revendication 6, caractérisé en ce que la section du tronçon médian (32) est plus petite que le diamètre du tronçon cylindrique inférieur (30).

8. Élément de maintien selon l'une des revendications 5 à 7, caractérisé en ce que la distance des extrémités (14, 15) du cadre (6) l'une depuis l'autre est supérieure à la longueur du tronçon médian (32).

9. Élément de maintien selon l'une des revendications précédentes, caractérisé en ce que les zones de maintien (2, 2', 2") présentent au-dessus du logement en forme de coque (21, 21', 21") au moins une barrette de maintien (25, 25', 25") dirigée vers la périphérie d'un élément tubulaire à monter.

10. Élément de maintien selon la revendication 9, caractérisé en ce qu'au moins une zone de maintien (2') comporte plusieurs paires de barrettes de maintien (26, 27) agencées à distance les unes au-dessus des autres.

11. Élément de maintien selon la revendication 10, caractérisé en ce qu'une partie respective d'une paire de barrettes de maintien (26, 27) est agencée sur une barrette verticale (8) du cadre (6) et l'autre partie sur une barrette verticale additionnelle (8') du cadre.

12. Élément de maintien selon la revendication 11, caractérisé en ce que la barrette additionnelle (8') est pourvue d'au moins un évidement (18).

13. Élément de maintien selon l'une des revendications précédentes, caractérisé en ce qu'il est prévu une autre zone de maintien (2"') agencée au-dessus d'un évidement (20") du cadre (6), laquelle présente sur une partie de sa périphérie une aile élastique (40) agencée sur la paroi intérieure et se projetant en oblique dans la chambre intérieure.

14. Élément de maintien selon la revendication 13, caractérisé en ce que la chambre intérieure de la zone de maintien (2"') est formée par deux barrettes (35, 36, 37) dirigées à angle droit les unes par rapport aux autres, sur les faces intérieures desquelles sont agencées les ailes (40).

15. Élément de maintien selon les revendications 13 et 14, caractérisé en ce que les deux barrettes verticales (35, 36) agencées à distance l'une de l'autre présentent des zones d'introduction supérieures (38, 39) incurvées l'une par rapport à l'autre.

16. Élément de maintien selon la revendication 15, caractérisé en ce que les zones d'introduction (38, 39) présentent respectivement une fente médiane (45, 46).

17. Élément de maintien selon l'une des revendications précédentes, caractérisé en ce que le tronçon cylindrique (30) de la zone de montage (3) comporte du côté intérieur des barrettes de maintien longitudinales (42) pour la mise en place dans un boulon profilé fixé sur le support.

18. Élément de maintien selon l'une ou plusieurs des revendications 1 à 16, caractérisé en ce que la zone de montage (3) est pourvue d'un boulon profilé, d'une pince, ou bien d'un élément de maintien pour la mise en place dans une ouverture du support.

19. Élément de maintien selon la revendication 18, caractérisé en ce qu'une lèvre d'étanchéité périphérique est agencée au-dessous du cadre (6) et au-dessus du boulon profilé, ou respectivement de la pince ou de l'élément de maintien.
